Europäisches Patentamt

European Patent Office

Office européen des brevets

(19)

(11) **EP 1 316 922 A1**

(12) **EUROPEAN PATENT APPLICATION**

(43) Date of publication:
04.06.2003 Bulletin 2003/23

(51) Int Cl.$^7$: **G06T 17/00**

(21) Application number: 01460075.3

(22) Date of filing: 30.11.2001

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **FRANCE TELECOM**
**75015 Paris (FR)**

(72) Inventors:
• **Cotarmanac'h, Alexandre**
**35000 Rennes (FR)**

• **Gioia, Patrick**
**35510 Cesson-Sevigne (FR)**

(74) Representative: **Vidon, Patrice**
**Cabinet Patrice Vidon**
**Le Nobel (Bât. A)**
**Technopôle Atalante**
**2, allée Antoine Becquerel**
**BP 90333**
**35703 Rennes Cedex 7 (FR)**

(54) **Adaptative method for displaying a graphic scene on a terminal based on wavelets coding**

(57)     The invention regards a method for rendering a graphic scene on a terminal, said graphic scene implementing a hierarchical tree comprising at least one node associated to an object of said scene.

According to the invention, at least one of said objects is defined by a wavelet-coded mesh, as a base mesh and wavelet coefficients corresponding to local modifications of said base mesh.

FIGURE 1

EP 1 316 922 A1

**Description**

The invention regards the rendering and displaying of an audio-visual scene on an user terminal. More precisely, the invention regards the representation of a multimedia graphic scene, comprising several objects interacting with one another, on a terminal, and especially, but not exclusively, graphic scenes coded according to the MPEG4 standard ("Motion Picture Expert Group").

By object, it is meant, here and in the whole document, a representation of a natural or synthetic object that has an audio and/or visual manifestation. (The reader can refer to annex 1 for definitions of some of the most important words used in the present application. The content of all the annexes to the present document are also part of the present application.)

**1. Prior art**

Two main standards, namely MPEG-4 (BIFS) and VRML (annex 2 provides a list of all the abbreviations and symbols used in this document), describe some rules for multimedia representation. In both standards, the management of three-dimensional objects offers two mechanisms for allowing an adaptive representation of a multimedia scene, namely :

- a first mechanism called LOD, for "Level Of Details". According to this mechanism, a single object is associated to different geometrical representations (for example, a coarse representation, and several successive more detailed representations). According to the distance between the object and an observer, the terminal choses the best fitted representation;
- a second mechanism, called Mesh3D or 3DMC, which is a method for compressing meshes, allowing to add polygons to the current mesh representation. It is thus possible to modify the number of polygons used in the mesh representation, in order to adapt the representation to an allowed budget of polygons, which may be a function, for example, of the terminal capacity.

A drawback of the first mechanism is that a great number of representations is associated to each object, which leads to the appearance of visual artefacts when changing from a first representation to the next one. Such a phenomenon is also known as "popping".

Such a state of the art mechanism is hence memory consuming, and lacks flexibility : each object is actually associated to a limited number of representations, and there is no criterion, apart from the distance from a virtual observer to the object, to decide which representation of the object should be displayed.

An advantage of the Mesh3D mechanism is that it offers a high compression ratio, and allows for an incremental building of the 3D model. This mechanism is based on Topological Surgery and Progressive Forest Splits. The principle is to encode topologically, and in a predictive way, some groups of connected local simplifications (vertex splits). The method is intended to provide both compression and progressiveness. This last feature is very important since it permits partial transmission and/or reconstruction according to bit rate or terminal rendering capabilities.

However, this method fails to provide both state of the art compression and decoding convenience.

First, Mesh3D is progressive but not hierarchical. The details can be added locally, but there is no obvious way to relate the coarsest versions of the mesh and further details added over it. Thus it is not well suited for animation, as hierarchical methods can be. Moreover, on-demand transmission of refinements and view-dependent reconstruction are quite difficult, since details are not well-localised and cannot be added independently. Actually, a drawback of this mechanism is that there is no visual quality criterion which can help decide what is the best number of polygons to be used in the mesh, depending on the viewpoint of an observer. It is thus very difficult, according to this mechanism, to simplify a mesh, by suppressing polygons which are not visually relevant for an observer.

In other words, such a mechanism allows an incremental, but non-adaptive, transmission of data.

Another main drawback of using 3DMC with recent 3D scenes is the compression ratio, which remains too low to enable fast reconstruction in the context of 3D model animation.

Still another drawback of 3DMC is that a 3DMC decoder is quite complex.

**2. Presentation of the invention**

**2.1 Goal**

It is an object of the invention to overcome these different drawbacks of the prior art.

More specifically, the invention aims at providing a method for allowing a hierarchical, efficiently compressed representation, enabling fast and selective reconstruction, in the context of 3D model animation.

Another object of the invention is to provide such a method which is well suited for network environments.

The invention also aims at providing a method for rendering a graphic scene on a terminal, which is well suited for animation of objects within the scene.

Another object of the invention is to provide such a method which allows on-demand transmission of refinements and view-dependent reconstruction of objects.

The invention also aims at providing such a method, which allows to render graphic scenes presenting an improved granularity compared to the methods of the art.

Still another object of the invention is to provide such a method allowing to introduce new functionalities into graphic scenes, and in particular adaptive transmission and decoding.

### 2.2 Main features of the invention

These objects as well as others which will appear subsequently, are achieved by means of a method for rendering a graphic scene on a terminal, said graphic scene implementing a hierarchical tree comprising at least one node associated to an object of said scene.

According to the invention, at least one of said objects is defined by a wavelet-coded mesh, as a base mesh and wavelet coefficients corresponding to local modifications of said base mesh.

Advantageously, said graphic scene is of the MPEG4 type.

Preferentially, for each of said objects defined by a wavelet-coded mesh, said corresponding node is associated, within a node interface of said hierarchical tree, to :

- a field relating to said base mesh, called BaseMesh ;
- a field relating to at least one rendering stream of said object, comprising said wavelets coefficients, called MeshStream,

and said BaseMesh and MeshStream fields can be transmitted and/or processed independently.

According to an advantageous feature of the invention, said terminal has a back channel, allowing to transmit at least one piece of information relating to said terminal and/or to an user of said terminal to a graphic scene server.

Preferentially, for each of said objects defined by a wavelet-coded mesh, said corresponding node interface comprises a field allowing to indicate said back channel.

Advantageously, said piece of information belongs to the group comprising

- a piece of information relating to the position of said user in said graphic scene, called position information ;
- a piece of information relating to a direction of observation of said user, called direction information ;
- a piece of information relating to the state of a cache of said terminal.

According to a preferred embodiment of the invention, said node interface also implements at least one of the fields belonging to the group comprising :

- a field relating to the texture of said object;
- a field indicating a frequency at which said terminal transmits at least one state information to a server ;
- a field relating to a field of view of said user, called FOV ;
- a field indicating a quality of rendering of said object, called Quality.

Advantageously, said node interface also comprises a field, called FocusPoint, allowing to indicate at least one area of said object for which an user wishes to get a quality of rendering greater than a predetermined threshold.

Preferentially, said Quality field pilots a relevance threshold for said wavelets coefficients, the wavelets coefficients lower than said relevance threshold not being applied to said mesh.

According to an advantageous feature of the invention, at least one of said objects may be animated by modifying in time, within said BaseMesh field, coordinates of at least one vertex of said base mesh, the wavelets coefficients of said MeshStream field remaining unchanged.

Advantageously, a step of editing said mesh allows to modify an existing object by acting on at least one of the elements belonging to the group comprising

- said base mesh;
- said wavelets coefficients ;
- a current mesh associated to said existing object within said rendered scene.

  Preferentially, said rendering stream of said MeshStream field is organised into packets of at least one wavelets coefficient.

Advantageously, said packets of said rendering stream are of at least two types of packets, among the types belonging to the group comprising

- base packets, comprising data which are essential to the rendering of said mesh defining said object;
- refinement packets ;
- bitplanes refinement packets, said refinement packets and said bitplanes refinement packets comprising data for refining said mesh.

Preferentially, said refinement packets comprise at least one wavelets coefficient allowing to refine the rendering of at least one area of said object.

Advantageously, said bitplanes refinement packets allow to refine the preciseness of at least one wavelets coefficient.

According to a first embodiment of the invention, said packets are transmitted from a server to at least one terminal within a single rendering stream.

According to a second embodiment of the invention, said packets are transmitted from a server to at least one terminal within at least two parallel data streams, corresponding respectively to a base stream, comprising at least one base packet, and to at least one refinement stream, comprising at least one refinement packet and/or at least one bitplanes refinement packet.

Preferentially, said information relating to the state of a cache of said terminal indicates at least:

- a number of wavelets coefficients associated to each packet stored within said cache ;
- a number of bitplanes associated to each packet stored within said cache.

Advantageously, said wavelets coefficients are organised into at least two separate subsets, extracted from a global data stream allowing to rebuild said object, each of said subsets corresponding to areas of said object, and undergoing independent coding, localisation data, which allow to locate said separate subsets within said global data stream, being inserted within said global data stream, so as to allow to distribute said wavelets coefficients among said packets, in view of a selective transmission of at least one of said subsets towards said terminal.

According to a preferred embodiment of the invention, said subsets undergo a coding of "zero-tree" type.

According to an advantageous feature of the invention, each type of packet is structured into subpacket(s) belonging to the group comprising

- for a base packet :

    - a subpacket relating to scale coefficients, allowing to modify the position of at least one vertex of said base mesh;
    - at least one subpacket relating to wavelets coefficients associated to a zero-tree, containing consecutive bitplanes and at least the first one ;

- for a refinement packet:

    - at least one subpacket relating to wavelets coefficients associated to a zero-tree, containing consecutive bitplanes and at least the first one ;

- for a bitplanes refinement packet:

    - at least one subpacket relating to wavelets coefficients associated to a zero-tree, containing consecutive bitplanes.

Preferentially, said global data stream comprises a header, comprising at least some of said localisation data, and a wavelets coefficients area, comprising a subarea identified by said localisation data for each of said subsets.

Advantageously, said header also comprises at least some of the information belonging to the group comprising

- the number of faces of said base mesh ;
- the type of wavelets ;
- information relating to said object;
- information relating to the coding of said localisation data.

According to an advantageous feature of the invention, a wavelets coded texture is also associated to at least one object defined by a wavelets coded mesh.

The invention also concerns a terminal rendering at least one graphic scene according to the method described hereabove, as well as a server of graphic scenes transmitting to at least one client terminal a graphic scene designed to be rendered according to the previously described method.

The invention also relates to a data storage medium comprising at least one graphic scene designed to be rendered by at least one client terminal according to the method described hereabove.

The invention covers as well a method for coding a graphic scene implementing a hierarchical tree comprising at least one node associated to an object, wherein at least one of said objects is defined by a wavelets coded mesh, as a base mesh and wavelets coefficients corresponding to local modifications of said base mesh. According to the invention, said graphic scene is designed to be rendered on at least one client terminal according to the previously described rendering method.

The invention still relates to a graphic scene implementing a hierarchical tree comprising at least one node associated to an object, wherein at least one of said objects is defined by a wavelets coded mesh, as a base mesh and wavelets coefficients corresponding to local modifications of said base mesh, as well as a node of a hierarchical tree representative of a graphic scene, associated to an object defined by a wavelets coded mesh, as a base mesh and wavelets coefficients corresponding to local modifications of said base mesh.

The invention also relates to a signal to be transmitted to at least one terminal for rendering a graphic scene on said terminal, said signal comprising data representative of said graphic scene implementing a hierarchical tree comprising at least one node associated to an object of said scene.

According to the invention, said signal comprises at least one object defined by a wavelets coded mesh, as a base mesh and wavelets coefficients corresponding to local modifications of said base mesh.

All the features described hereabove in relation to the method for rendering a graphic scene of course also apply to the signal according to the invention, although they are not explicitly stated here, for conciseness purpose.

The invention also relates to a device comprising means for emitting a signal as previously described, as well as a device comprising means for receiving a signal as previously described.


### 2.3 Drawings

Other features and advantages of the invention will be more clearly apparent upon reading the following description of one preferred embodiment of the invention, given as an illustrative and non-limiting example and the appended drawings wherein :

- Figure 1 discloses the structure and the functioning of a decoder according to the invention, allowing to render a graphic scene on a terminal;
- Figures 2a to 2d disclose the structure of the packets comprised in the signal according to the invention and decoded by the decoder described in figure 1 ;
- Figure 3 illustrates an embodiment of the decoding process according to the invention, allowing to provide a reconstructed 3D wavelet mesh from a base mesh and a 3D wavelet mesh bitstream;
- Figure 4 illustrates the notion of offspring of a coefficient.

Before describing in details a preferred embodiment of the invention, we recall briefly the main features of the two main coding techniques of objects or images, namely :

- the classical method based on the subdivision of the faces of a polygonal mesh;
- the wavelet coding method.

Second generation wavelets have proven to be a powerful tool for scalable representation of 3D surfaces.

One important property of wavelets is that they are well localised in space, which enables efficient selection of significant wavelets according to the position of the refinements they induce, as well as their frequency or magnitude. This selection can of course be applied at the reconstruction stage, but in a client/server configuration, the server can also use this information to transmit only the necessary refinements to the terminal.

In the classical subdivision surfaces setting, objects are described by a coarse mesh (called the *base mesh*) along with a subdivision rule that represents an *almost-everywhere* smoothing : the subdivision rule is iterated so that the resulting sequence of meshes converge to the initial surface. Hence, given this rule, no extra information has to be transmitted to get the smooth object.

In a nutshell, the principle of geometrical wavelets is to locally weight the application of a given subdivision rule over the base mesh. Information is thus added at various stage of the subdivision rule iteration, as described in ISO 639-2 :1998, Code for the representation of names of languages - Part 2 : Alpha-3 codes. Hence a subdivision surface can be regarded as a wavelet representation with all coefficients set to 0.

It is important to note that the initial models (those to be encoded) suitable for each of these two techniques are from two basically different kinds : subdivision surfaces are adapted to models with large regular areas, while wavelets are useful for objects with many chaotic "high frequency" peaks. For example, representing a noised object with subdivision surfaces will require too complex a base mesh, which has to contain high frequencies.

Though wavelet representation performs high decorrelation of the surfaces geometry, their encoding can lead to further considerable gain in compression. The state-of-the-art techniques for efficiently encoding both classical or geometrical wavelets are zero-trees. Zero-trees provide progressive encoding of the *significance maps,* i.e. parts of the object which are pertinent for a given threshold. The objective is to mark the largest amount of non-pertinent coefficients with minimum information.

Zero-trees have initially been developed in the context of 2D image coding (as described for example by M. Lounsbery et al. "Multiresolution Analysis for Surfaces of Arbitrary Topological Type", ACM Trans. On Graphics, 16(1), Jan. 1997 or by A. Khodakovsky et al. in "Progressive Geometry Compression", SIGGRAPH 2000 proceedings), and extended to 3D shapes (as described for example by A. Said and W. A. Pearlman in "Image compression using the spatial-orientation tree" In. Proc. IEEE Int. Symp. Circuits and Syst., Chicago, IL, pages 279-282, May 1993). The original algorithms can be directly applied provided that a hierarchy is expressed between coefficients, as it is canonically the case in the 2D setting. One drawback of the impressive compression ratios obtained by zero-trees is that, up to date, the order of decoding was imposed.

Suppose now that a server transmits geometric data to a terminal with unknown and/or limited processing power. As the portion of a 3D scene actually viewed is generally a small part of the whole scene, most part of the corresponding bitstream may not be needed by the client.

With the traditional zero-tree embedded representation, the client can start navigating in the 3D scene just after the reception of the base mesh, which is then refined during the walkthrough. But as the order of arrival of the coefficients is imposed by the zero-tree representation, the terminal may have to load many useless wavelet coefficients before the ones it actually needed.

The inventors have had the idea that a great improvement could be achieved if the terminal could be able to ask the server some parts of the bitstream representation of the wavelet coefficients, and if the server could be able to select the relevant parts of this bitstream from information about the client (e.g. view direction, position, viewed facets, ...) provided through the back-channel. The main problem is that enabling the change in the order of arrival of the coefficients would imply non-negligible loss in term of compression.

As will be described further in more details, the inventors have found an inventive solution to this problem, by building a bitstream, composed of isolated zero-trees on areas independent enough to have comparable compression ratios, but small enough compared to the whole model to let the corresponding groups of wavelet coefficients have local influence on the base mesh.

We now define the principles of adaptive 3D-mesh decoding according to the invention.

For clarity and simplicity purposes, we consider, from now on, a MPEG4-type scene, comprising several objects, which may be either 2D or 3D objects.

**A.1.1 Scope**

A.1.1.1 Architecture

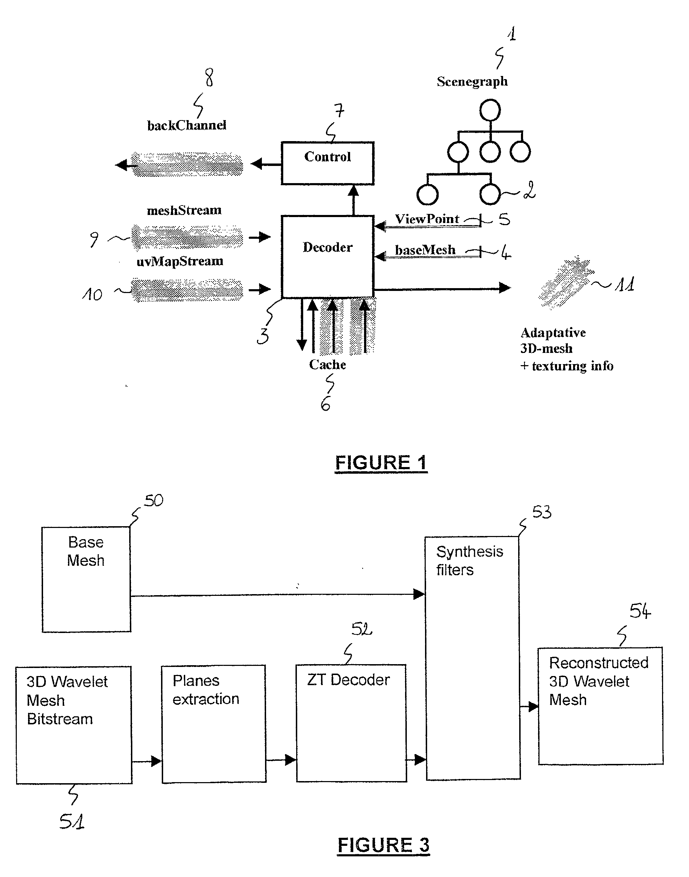

Figure 1 describes a simplified decoder block-diagram. Such a decoder is for example comprised within the user terminal designed to display the considered graphic scene.

Such a graphic scene is associated to a scene graph 1 implemented as a hierarchical tree comprising a plurality of nodes. Node 2 is for example associated to an object defined by a mesh (or a texture) coded according to the wavelets encoding method.

The decoder 3 decodes the base mesh 4 associated to node 2, so that the corresponding object can be rendered by the terminal at its coarsest definition.

Decoder 3 also exchanges information with a cache 6 associated to the terminal : it can ask the cache 6 about its state (for example, it can ask for the list of wavelet coefficients associated to node 2 stored in cache 6, or for the number of bitplanes associated to each packet store in cache 6), and it can receive some data necessary for displaying the considered object from the cache 6 (for example, the cache 6 sends to decoder 3 the wavelet coefficients necessary for refining a portion of the base mesh 4, as a function of the view point 5 of a virtual observer).

Decoder 3 also provides the control entity 7 with information relating to the terminal and/or relating to the user, such as some information about the view point 5 of an user of the terminal, the direction of observation of the user, or the state of cache 6 for example.

The control entity 7 sends these information to a server, through the back channel 8.

The server (not illustrated on figure 1) computes the wavelet coefficients which are necessary to the terminal for displaying the scene, as a function of the information received through the back channel 8, and sends them to decoder 3, through the MeshStream entity 9. In other embodiment of the invention, these wavelet coefficients may have been pre-computed. The server can also computes some data needed by the terminal to render the texture of the object considered, and sends them through uvMapStream 10.

The decoder 3 decodes the data received through MeshStream 9, through uvMapStream 10, and from the cache 6, so as to build a representation 11 of the object, from a base mesh and from wavelets coefficients corresponding to local refinements of the mesh.

A.1.1.2 Walkthrough.

We know briefly describe the walkthrough in relation to figure 1.

- First the BIFS Node 2 is decoded.
- The BaseMesh 4 is decoded and instantiated.
- The texture is decoded and instantiated.
- Now, it's possible to render the node 2 at its coarsest definition.
- When the BaseMesh 4 has been instantiated, the following streams, if they exist, are set up :

  ⇒ MeshStream 9
  ⇒ BackChannel 8
  ⇒ UvMap 10

- Data from MeshStream 9 are received, they are cached depending on the viewpoint and quality fields.
- Depending on viewpoint and quality fields, the adaptive mesh is built using the BaseMesh 4, its TextureCoordinate and available coefficients that have been gathered both in MeshStream 9 and UvMap 10.
- Depending on the frequency field and on the viewpoint, data is sent through the BackChannel 8. This contains information about viewpoint and cache state.
- Depending on the viewpoint and on the cache state, data is removed from the cache 6.
- When the coordinates of the BaseMesh 4 are animated, modified, interpolated, the adaptive mesh is re-built.

**A.1.2 Node specification**

A.1.2.1 WaveMesh

*A.1.2.1.1 Node interface*

```
WaveMesh {

    field         MFString     backChannel          []

    field         SFNode       baseMesh             NULL

    field         MFString     meshStream           []

    exposedField SFNode        texture              NULL

    exposedField SFFloat       frequency            1.0

    exposedField SFFloat       FOV                  45

    exposedField SFInt32       quality              1

        }
```

The binary encoding of this node is described in more details in annex 3.

*A.1.2.1.2 Functionality and semantics*

The **WaveMesh** node is used to represent adaptively multi-resolution polygonal models. It allows representing at any moment a 3D-model at a resolution which depends on the distance of the object with respect to the viewpoint. Transmission of such a model consists of two parts : a base mesh which describes the model at the coarsest level of detail, and series of refinements (wavelet coefficients) which can be carried on one or more elementary streams (one can refer to annex 1 of this document for a definition of the term "bitstream").

The **BackChannel** field specifies, if present, an upstream channel which allows a server to monitor which series of refinement are needed at the terminal. Thus in an interactive scenario (client-server interaction), refinements are sent according to the client state ((one can refer to annex 1 of this document for a definition of the term "back-channel bitstream").

The **BaseMesh** field shall specify either a Hierarchical3DMesh node or an **IndexedFaceSet** node. In the former case, the stream containing the mesh shall consist of a single access unit, and it will be explicitly instantiated as an **IndexedFaceSet.** In both cases, the structure of the (resulting) **IndexedFaceSet** will be preserved, namely deletion and insertion of new faces and/or vertices is explicitly forbidden. However, replacing the values of the coordinates is allowed.

As one will note, the inventors have chosen, in a preferred embodiment of the invention, to limit the functionalities inside the node, instead of redefining new nodes.

It can also be noted that instantiating explicitly BaseMesh as an IndexedFaceSet allows animating the node.

The **MeshStream** field shall specify the data source for wavelet coefficients, as will be explained further in more details. The terminal is responsible for maintaining an internal representation of the mesh to be rendered consisting of the BaseMesh to which apply the **MeshStream** data.

TextureCoordinate is provided by the IndexedFaceSet. The **TextureCoordinate** node shall apply on a per vertex basis. Texture coordinate is interpolated when the mesh is refined.

The texture exposedField allows to map a texture to the geometry. Texturing rules are as of VRML, applied to the BaseMesh instantiated IndexedFaceSet

The frequency exposedField gives a preferred frequency at which the terminal shall give its state by the means of the BackChannel stream if it exists.

As it can be noted, if the BackChannel does not exist this field has no effect.

The **quality** exposedField allows to parametrize the quality of the rendered object. The range of values for this field is [0..2] where 0 stands for low quality, 1 for normal quality, 2 for best quality. Those values do not have a more explicit semantic, that is, it is a hint for the terminal.

For instance a quality value of 0, could mean using a very fast but approximate metric for choosing relevant wavelet coefficients. The player is responsible for adapting to such changes.

The WaveMesh node is seen by the player as an **IndexedFaceSet** node container. That is to say, the player has access to the BaseMesh field.

**A.1.3 MeshStream : the wavelet mesh coefficient stream**

The MeshStream is the stream conveying the wavelet coefficients which are necessary to represent adaptively a 3D-Mesh.

The different fields described hereabove as part of a node interface according to the invention allow to provide several interesting functionalities to an user of the terminal on which the graphic scene is rendered, namely :

- it allows to animate an object within the graphic scene, by animating the base mesh associated to this object. Actually, as described above, the BaseMesh field internally behaves as an IndexedFaceSet type mesh, on which it is possible to modify the coordinates of the vertices. Animating the vertices of the base mesh will thus allow to animate the whole reconstructed mesh, at the given level of refinement or rendering considered. The wavelets coefficients will actually apply on the animated base mesh. Such an animation could be described as follows :

```
DEF CI CoordinateInterpolator

{

..

}

DEF WV WaveMesh

{

        baseMesh DEF IFS IndexedFaceSet

            {

                coord DEF COORD Coordinate { }

            }

}

ROUTE CI.value_changed TO COORD.point
```

Another embodiment of such a functionality could also consist in adding a field called "points" to the node interface described hereabove.

- it also allows to refine some parts of the mesh, as requested by the user. This is achieved by adding a field called exposedField_SFVec3f_focus_point (also called Focus Point in this document), defined in the local coordinate system associated to the base mesh. For example, an user of the terminal can select a portion of the object he wishes to refine in more details, by clicking on such a portion with a mouse associated to the terminal. It is thus possible to route on the Focus Point field, in order to ask for a greater quality around the point selected by the user. It is also possible, for example, to ask the user about the size of the portion surrounding the selected point of the mesh he wishes to refine, which is somehow equivalent to setting a second FOV type field.

- such a node interface also allows to adjust the threshold above which the wavelet coefficients have to be taken into account. This is made possible through the Quality field, which has been previously described as being a discrete field which value could either be 0, 1 or 2, but which could also take continuous values in another embodiment of the invention. The wavelet coefficients are actually taken into account when their value is greater than a relevance threshold, which is a function of the distance from a virtual observer (that is to say, the user of the terminal) to the object. The Quality field could thus pilot the relevance threshold, so as to allow the user to decide with accuracy which wavelet coefficients should be taken into account for rendering the object.

- the structure of the node interface described above also allows to edit a mesh, thanks to the BaseMesh and FocusPoint fields, through which it is possible to modify the base mesh as well as the wavelet coefficients. Exposing the base mesh allows to animate the object, as described hereabove, but also allows to edit the mesh on the associated base mesh. Moreover, by adding the functionalities described above in relation to the Focus Point and Quality fields, it is possible to select a mesh at a given level of refinement, and to modify the associated wavelet coefficients, thus allowing an easy and multi-resolution editing. It is thus possible to modify an object by acting either on the base mesh, on the wavelet coefficients, or on the mesh associated to an object for a given level of rendering.

A.1.3.1 Stream Configuration : DecoderSpecificInfo

*A.1.3.2 Syntax*

```
class  Wmesh_DecoderConfig  extends  DecoderSpecificInfo  :  bit(8)

tag=DecSpecificInfoTag {

    bit(1) Wtype;

    bit(5) NbBP;

    double Cmax;

    bit(5) NbBpSC;

}
```

*A.1.3.3 Semantics*

NbBP : the number of bitplanes. (typically 12 or 16)

Wtype : the type of wavelet.

> 0 : lifted midpoint subdivision with one vanishing moment.
> 1 : Loop

NbBpSC : the number of bit per scale coefficient.
Cmax : maximum wavelet/scale coefficient magnitude.

*A.1.3.4 Bitstream syntax.*

The MeshStream is the stream conveying the wavelet coefficients which are necessary to represent adaptively a 3D-Mesh.

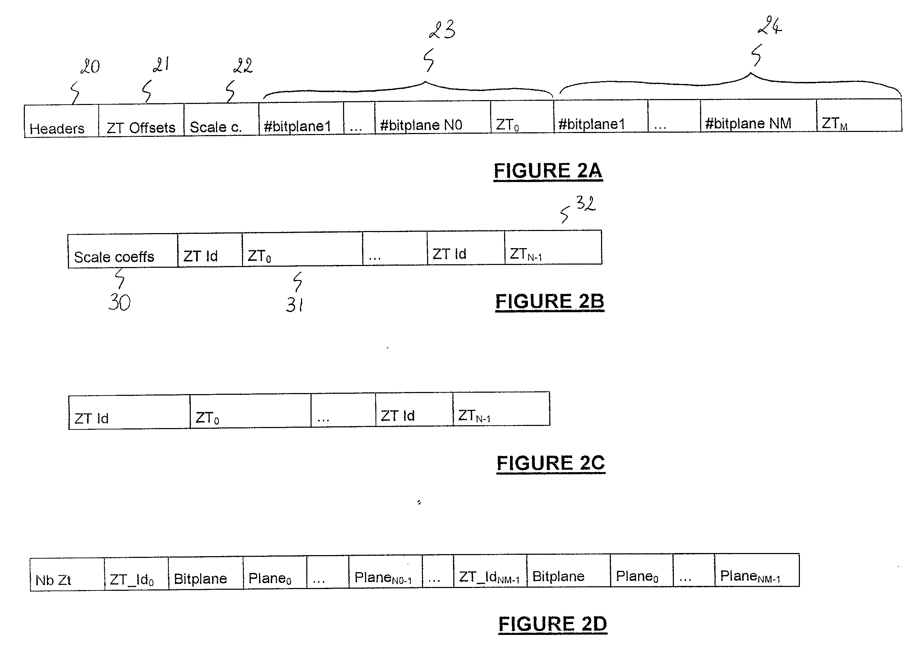

Figures 2a to 2d respectively describe the file structure and the bitstream structure for every type of packets, namely the base packets, the refinement packets, and the bitplanes refinement packets.
Such a coding allows to distribute the data in different packets depending on their nature, namely :

> a) essential data
> b) non-essential data

which are transmitted to the terminal in one or several parallel streams, corresponding to a base stream and different refinement streams.
Figure 2b thus shows a base packet, which comprise essential data, wheras figures 2c and 2d respectively describe refinement packets and bitplanes refinement packets, which comprise refinement data which can be sent to the terminal through one or several parallel streams.
Figure 2a presents a typical (non-normative) file structure that may be stored prior to any transmission. The "ZT offsets" shall contain information on the position of the $ZT_i$s in the file, as well as positions of data relative to each bitplane for any $ZT_i$. As shown in figure 2a, the file structure comprises of:

- a header 20, comprising some information about the type of wavelets used, some parameters of the zero-tree coding, the number of wavelets coefficients per packet, etc.
- a zone 21 comprising some information about the zero-tree offsets, so as to localise, within the stream, each subarea associated to each zero-tree ;
- scale coefficients 22 ;
- subpackets 23, 24 relating to wavelets coefficients associated to the zero-trees, and to bitplanes.

The different structures of the received bitstream can be summarised by the tables shown in figures 2b to 2d. The exact structure is given by the syntax specification described hereafter.

Figure 2b describes the structure of a base packet, comprising

- a subpacket 30 relating to scale coefficients, allowing to modify the position of the base mesh vertices;
- subpackets 31, 32 relating to wavelets coefficients associated to a zero-tree, containing consecutive bitplanes and at least the first one.

As shown on figure 2c, a refinement packet as a structure similar to that of a base packet, except for the scale coefficients 30.

Figure 2d presents the structure of a bitplanes refinement packet.

It is thus possible to distribute the data in packets according to the numerical preciseness required for the rendering of the graphic scene. In other words, the refinement of the mesh also allows for the preciseness on the wavelet coefficients themselves, since the bitplanes refinement packets described in figure 2d allow to send packets which only purpose is to refine the preciseness with which the terminal knows the wavelet coefficients.

The 3D_Wavelet_Mesh_Object Syntax is as follows :

### 3D_Wavelet_Mesh_Object

| 3D_Wavelet _Mesh_Object () { | No. of bits | Mnemonic |
|---|---|---|
| **3D_WMO_start_code** | 16 | uimsbf |
| **Base_id** | 8 | uimsbf |
| do { | | |
|    3D_Wavelet_Mesh_Object_Layer() | | |
| } while (nextbits_bytealigned() == **3D_WMOL_start_code**) | | |
| } | | |

The 3D_Wavelet_Mesh_Object_Layer has the following structure :

| 3D_ Wavelet_Mesh_Object_Layer () { | No. of bits | Mnemonic |
|---|---|---|
| **3D_WMOL_start_code** | 16 | uimsbf |
| **3D_WMOL** | 1 | |
| if (!3D_WMOL==0) | | |
|    3DWaveletMeshObject_Base_Layer() | | |
| else | | |
|    3DWaveletMeshObject_Refinement_Layer() | | |
| } | | |

We now present the 3D_Wavelet_Mesh_Object_Base_Layer :

| 3D_Wavelet_MeshObject_Base_Layer() | No. of bits | Mnemonic |
|---|---|---|
| do { | | |
| **3D_WMOBL_start_code** | 16 | uimsbf |
| **wmobl_id** | 8 | uimsbf |
| 3D_Wavelet_Mesh_Object_Scale_Coeff() | | |
| ReadZT(0, wmobl_id) | | |
| } while (nextbits_bytealigned() == 3D_MOBL_start_code) | | |
| } | | |

The following table describes the 3D_Wavelet_Mesh_Object_Scale_Coeff() syntax :

| 3D_ Wavelet_Mesh_Object_Scale_Coeff() { | No. of bits | Mnemonic |
|---|---|---|
| For (i=0 ; i< Nb_sc ; i++) { | | |
| **Sc[i]** | NbBpC | bslbf |
| } | | |
| } | | |

The 3D_Wavelet_Mesh_Object_Refinement_Layer syntax is described in the following table :

| 3D_Wavelet_MeshObject_Refinement_Layer() | No. of bits | Mnemonic |
|---|---|---|
| do { | | |
| **3D_WMORL_start_code** | 16 | uimsbf |
| **wmorl_id** | 8 | uimsbf |
| **type** | | |
| ReadZT(type, wmorl_id) | | |
| } while (nextbits_bytealigned() == **3D_MORL_start_code**) | | |
| } | | |

The ReadZT() syntax is described hereunder :

| ReadZT(A, id) { | No. of bits | Mnemonic |
|---|---|---|
| If (A) { | | |
| **FBP** | | |
| **LBP** | | |
| } else { | | |
| FBP=0 | | |
| LBP=NbBP | | |
| } | | |
| For (j=FBP; j<LBP ; i++) { | | |
| **BPLength** | 16 | uimsbf |
| For (k=0 ; k<BPLength ; k++) { | | |
| **Bx[id][k][j]** | 1 | |

| } | | |
|---|---|---|
| } | | |
| For (j=FBP; j<LBP ; i++) { | | |
| **BPLength** | 16 | uimsbf |
| For (k=0 ; k<BPLength ; k++) { | | |
| **By[id][k][j]** | 1 | |
| } | | |
| } | | |
| For (j=FBP; j<LBP ; i++) { | | |
| **BPLength** | 16 | uimsbf |
| For (k=0 ; k<BPLength ; k++) { | | |
| **Bz[id][k][j]** | 1 | |
| } | | |
| } | | |
| } | | |

*A.1.3.5. Semantics*

3D_WMO_start_code : This is a unique 16-bit code that is used for synchronisation purpose. The value of this code is always '0000 0000 0010 0000'.

Base_id : this 8 bit integer characterises the Wavelet Mesh Object, and is used as a reference for further refinement layers.

3D_WMOL_start_code : 3D_MOL_start_code : This is a unique 16-bit code that is used for synchronisation purposes. The value of this code is always '0000 0000 0011 0000'.

3D_MOL : a boolean with value 0 if and only if the current stream is a base layer.

3D_WMOBL_start_code : This is a unique 16-bit code that is used for synchronisation purpose. The value of this code is always '0000 0000 0111 0000'.

3D_WMORL_start_code : This is a unique 16-bit code that is used for synchronisation purpose. The value of this code is always '0000 0000 0010 0000'.

wmobl_id : an integer specifying the reference to the object for further refinements.

wmorl_id : an integer specifying the reference to the object to refine.

BPLength : the length of the current bitplane.

Type : a boolean with value 0 if and only if the current bitstream corresponds to type 0 in the bitstream description.

FBP : Number of the first bitplane to read.

LBP : Number of the last bitplane to read.

Bx : A 3-table of bits used for encoding the first component of the wavelet coefficients. The first entry is the number of the zero-tree. The second one is the number of the current bitplane received. The third one is the number of the received bit in this plane.

By : A 3-table of bits used for encoding the second component of the wavelet coefficients. The first entry is the number of the zero-tree. The second one is the number of the current bitplane received. The third one is the number of the received bit in this plane.

Bz : A 3-table of bits used for encoding the third component of the wavelet coefficients. The first entry is the number of the zero-tree. The second one is the number of the current bitplane received. The third one is the number of the received bit in this plane.

*A.1.3.6 3D Wavelet Mesh Decoding*

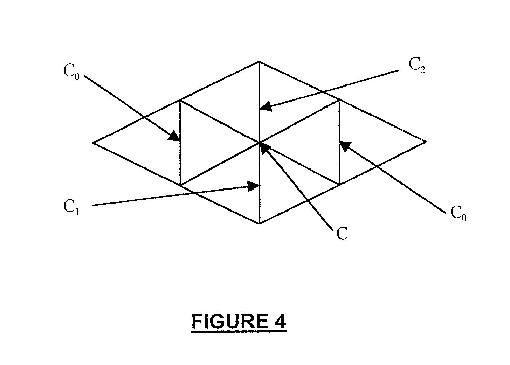

The typical 3D Wavelet Mesh decoding process is figured by the block diagram presented in figure 3.

The mesh reconstruction can only begin after transmission and decoding of the base mesh 50.

We now give some definitions and notations.

Let $M_0$ denote the base mesh, which is supposed to be entirely transmitted before the wavelet coefficients stream starts being decoded.

Let $M_j$ denote the mesh obtained after *j* iterations of midpoint subdivision of each facet of $M_0$.

For j non-negative, let $\Delta_j$ denote the set of vertices of $M_j$, and $\Lambda_j$ the set of vertices of $M_{j+1}\backslash M_j$.

Scaling/wavelet coefficients can be indexed by vertices of the reconstructed mesh, and the level of subdivision at which they occur. Hence, we will denote any coefficient c indexed by level j and vertex *v* as $c^j_v$.

A coefficient $c^j_v$ is said to be offspring of a coefficient $c^{j-1}_w$ if and only if vertex w is a comer vertex of a facet of $M_j$. The offspring O(c) of a coefficient c is the set of coefficients $\{c_0, c_1, c_2, c_3\}$, as shown in figure 4. The arrows denote the vertices associated to the coefficients, the triangulation figuring the midpoint subdivision of two adjacent facets.

The *descendence D(c)* of a coefficient is the transitive closure of the relation "is offspring of".

For any 3-vector or 3-vector-valued function c, let $c_x$, $c_y$, and $c_z$ denote respectively the first, second and third component of c.

While receiving the 3D Wavelet Mesh bitstream 51, the decoder stores in memory the contiguous bits related to a given bitplane in a given Zero-tree. Such a storage can be figured as follows, for each table Bx, By, Bz representing the three components of the wavelet coefficients :

First Zero-tree:

| Sorting bits + signs | |
| --- | --- |
| Sorting bits + signs | Refinement bits |
| Sorting bits + signs | Refinement bits |

...

| Sorting bits + signs | Refinement bits |
| --- | --- |

Second Zero-tree:

...

Last Zero-tree:

| Sorting bits + signs | |
| --- | --- |
| Sorting bits + signs | Refinement bits |
| Sorting bits + signs | Refinement bits |

...

| Sorting bits + signs | Refinement bits |
| --- | --- |

Thus the Zero-tree decoder is completely independent of the bitstream interpretation process. This structure in memory is modified according to the type of bitstream the decoder gets:

Type 0 (as described in figure 2b) :

Base layer. Scaling information, complete header are read, and new Zero-trees are created in memory by the decoder.

Type 1 (as described in figure 2c) :

Refinement layer in which new zero-trees are sent and created in memory by the decoder.

Type 2 (as described in figure 2d) :

Bitplanes refinements of previously sent zero-trees.
This structure corresponds to the entries of table B : B[i][j][k] is stored in the i-th zero-tree space, at line j and column k.
In the Zero-tree decoder 52, the algorithm described in the previously mentioned article by A. Said and W. A. Pearlman is applied as is with previous definition of offspring and descendants, on each table Bx, By and Bz for recovering respectively a list Lx, Ly and Lz of projected wavelet coefficients.

*A.1.3.7 Synthesis filters and mesh reconstruction*

We describe here the standard, non-algorithmic mesh reconstruction process using the above decoded/stored wavelet coefficients. The scope of adaptability will thus be restricted to the transmission : no normative directives will constrain the way the client selects the data contained in his cache for partially reconstructing the mesh, according to frame-rate, LoD management etc. Such a reconstruction implements the synthesis filters 53 in order to deliver a reconstructed 3D Wavelet mesh 54.

The behaviour of the terminal designed to render the graphic scene could be described in other words as follows. The terminal first receives a scene graph comprising a node associated to an object which mesh is coded according to a wavelet encoding technique. Such a node also comprises means to configure a wavelet decoder called "DecoderConfig".

The node comprises the definition of a base mesh, some references to compressed wavelet coefficients streams, some parameters allowing to adjust the behaviour of the node, as well as its modification within the scene graph, and optionally a description of a back channel, as mentioned previously in the document.

The terminal instantiates a decoder thanks to "DecoderConfig" and opens one or several data channels associated to the decoder. In case there are several channels, one of them is considered as the base channel, while the others are refinement channels, as already mentioned previously).

The data received by the terminal through this or these channel(s) are decoded, in order to get the wavelet coefficients, which are stored in a cache associated to the terminal (for example, the stocking/destocking takes place in a buffer memory.

According to the position of the user in the scene, the rendering system of the terminal decides to take into account a given number of wavelet coefficients and to apply them to the base mesh, which allows to obtain a mesh which is adapted to the visualisation conditions. Such a mesh is then displayed on the screen of the terminal.

The topology (facets configuration) of the fully reconstructed mesh is semi-regular : it corresponds to the topology of $M_j$.

The geometry (vertices position in space) of the mesh can be recovered as follows :

For j non-negative, let $T^j$ and $B^j$ be matrices as specified in Annex 4.

Let $(c^0{}_i)_i$ be the decoded scale coefficients.

Then the positions $c^j{}_i$ of respective vertices $v_i$ can be recovered by iterating the following relations :

$$c_x^{j+1} = T^j (c_x^{jt} f_x(d^j)^t)^t$$

$$c_y^{j+1} = T^j ( c_y^{jt} f_y(d^j)^t )^t$$

$$c_z^{j+1} = T^j (c_z^{jt} f_z(d^j)^t )^t$$

over $j=jmax$, ..., $0$, Function $f$, which is a basis change transformation from local coordinates to global coordinates is explained in Annex 4.

Of course, in practice, one can exploit the sparsity of matrices $T^j$, and the fact that only a portion of the $(c^j)$ (and only the corresponding non-homogeneous semi-regular topology) need to be used in the reconstructed mesh.

**A.1.4 BackChannel : the monitoring channel.**

The BackChannel is the stream conveying the information necessary to monitor the state of the terminal (cache state, viewpoint).

A.1.4.1 Functionality.

The BackChannel is an upstream elementary stream which allows the client to request for specific chunks of the wavelet coefficients so that only relevant parts of the mesh/uvMap are refined. It also allows the server to know the client state and send in advance chunks that may be useful.

A.1.4.2 ES Configuration. DecoderSpecificInfo

The configuration is defined as follows.

*A.1.4.2.1 Stream Configuration : Syntax*

```
class WmeshBC_DecoderConfig extends DecoderSpecificInfo : bit(8)
tag=DecSpecificInfoTag {
    bit(5)  viewpointNbBits
}
```

*A.1.4.2.2 Semantics*

ViewpointNbBits is the number of bits used to quantize the viewpoint direction.

A.1.4.3 BackChannelFrame.

*A.1.4.3.1 Syntax*

```
class BackChannelCommandFrame() {
        Position position;
        Viewpoint viewpoint;
        bit(1) reserved


                        bit(1) hasMeshCacheState
                        if (hasMeshCacheState)
                        {
                            CacheState meshCacheState;
                        }
                        else
                        {
                            CacheDelta meshCacheDelta;
                        }
                }
```

*A.1.4.3.2 Semantics.*

This is the payload of an access unit (AU), as defined in annex 1.
First the position and the viewpoint direction are sent. The position is described in the local coordinate system of the WaveMesh node.

A.1.4.4 Position

*A.1.4.4.1 Syntax*

```
class Position () {
    EfficientFloat x
    EfficientFloat y
    EfficientFloat z
}
```

*A.1.4.4.1 Semantics*

The Position syntax describes the position of the user with respect to the local coordinate system of the user.

A.1.4.5 Viewpoint

*A.1.4.5.1 Syntax*

```
class Viewpoint () {
        int(1) direction
        int(2) orientation
        int(viewpointNbBits) vq[0]


                int(viewpointNbBits) vq[1]
        }
```

*A.1.4.5.2 Semantics.*

The Viewpoint syntax describes the viewing direction of the user with respect to the local coordinate system of the user. It uses the quantization scheme defined in 9.3.7.25 in ISO/IEC 14496-1 with a fixed number of bits defined in the decoder specific info.

A.1.4.6 CacheState

*A.1.4.6.1 Syntax*

```
class CacheState () {
    bit(2) reserved
    int i=0;
    for (i=0;i<numFaces;i++)
    {
        int(8) numWaveletCoefficients
        int(5) numBitPlane
    }
}
```

*A.1.4.6.2 Semantics.*

This element specifies for all the faces of the base mesh the number of coefficients as well as the number of bitplanes received concerning those coefficients.

A.1.4.7 DeltaCache

*A.1.4.7.1 Syntax*

```
class DeltaCache () {
    bit(2) reserved
    int i=0;
    int(5) numFaceBits;
    int nbBits=numFaceBits;
```

```
for (faceNb =0;i<numFaces;i++)

{

    if (baseMeshFace[faceNb].cacheStateHasChanged())

    {

        int (nbBits) faceNb;

        int(8) numWaveletCoefficients˚;

        int(5) numBitPlane;

    }

}

}
```

*A.1.4.7.2 Semantics.*

This element specifies for all the faces of the base mesh the number of coefficients as well as the number of bitplanes received concerning those coefficients.

ANNEX 1

**DEFINITIONS :**

**1. Access Unit (AU)**

An individually accessible portion of data within an *elementary stream.* An access unit is the smallest data entity to which timing information can be attributed.

**2. Audio-visual Object**

A representation of a natural or synthetic object that has an audio and/or visual manifestation. The representation corresponds to a node or a group of nodes in the BIFS scene description. Each audio-visual object is associated with zero or more *elementary streams* using one or more *object descriptors.*

**3. Audio-visual Scene (AV Scene)**

A set of audio-visual objects together with scene description information that defines their spatial and temporal attributes including behaviours resulting from object and user interactions.

**4. Binary Format for Scene (BIFS)**

A coded representation of a parametric scene description format.

**5. Terminal**

A system that sends, or receives and presents the coded representation of an interactive audio-visual scene as defined by ISO/IEC 14496-1. It can be a standalone system, or part of an application system complying with ISO/IEC 14496.

ANNEX 2

**Abbreviations and Symbols**

| | |
|---|---|
| AU | Access Unit |
| AV | Audio-visual |
| BIFS | Binary Format for Scene |
| CM | Composition Memory |
| CTS | Composition Time Stamp |
| CU | Composition Unit |
| DAI | DMIF Application Interface (see ISO/IEC 14496-6) |
| DB | Decoding Buffer |
| DTS | Decoding Time Stamp |
| ES | Elementary Stream |
| ESI | Elementary Stream Interface |
| ESID | Elementary Stream Identifier |
| FAP | Facial Animation Parameters |
| FAPU | FAP Units |
| NCT | Node Coding Tables |
| NDT | Node Data Type |
| OCI | Object Content Information |
| OCR | Object Clock Reference |
| OD | Object Descriptor |
| ODID | Object Descriptor Identifier |
| OTB | Object Time Base |
| PLL | Phase Locked Loop |
| QoS | Quality of Service |
| SDM | Systems Decoder Model |
| SL | Synchronization Layer |
| SL-Packet | Synchronization Layer Packet |
| SPS | SL-Packetized Stream |
| STB | System Time Base |
| TTS | Text-To-Speech |
| URL | Universal Resource Locator |
| VOP | Video Object Plane |
| VRML | Virtual Reality Modeling Language |

**ANNEX 3**

**WaveMesh**

| WaveMesh | SFWorldNode<br>SF3DNode | | | | | 0110000<br>01001 | | |
|---|---|---|---|---|---|---|---|---|
| *Field name* | *Field type* | *DEF id* | *IN id* | *OUT id* | *DYN id* | *[m, M]* | *Q* | *A* |
| backChannel | MFUrl | 000 | | | | | | |
| baseMesh | SFNode | 001 | | | | | | |
| meshStream | MFUrl | 010 | | | | | | |
| texture | SFUrl | 100 | 00 | 00 | | | | |
| frequency | SFFloat | 101 | 01 | 01 | | [0,100] | | |

(continued)

| WaveMesh | SFWorldNode SF3DNode | | | | | 0110000 01001 | | |
|---|---|---|---|---|---|---|---|---|
| *Field name* | *Field type* | *DEF id* | *IN id* | *OUT id* | *DYN id* | *[m, M]* | *Q* | *A* |
| quality | SFInt32 | 110 | 10 | 10 | | [0,2] | | |

## ANNEX 4

### Synthesis filters and basis changes

For a purpose of clarity, vertices will be identified to their indices. Let $d_j(i,k)$ denote the function returning the shortest edge-path on $M_j$ between vertices i and k.

Let level(i) denote the function returning the smallest j so that vertex i belongs to $M_j$.

Let $S_j$ denote the mesh having the same connectivity as $M_j$ but whose vertices have $c^j$ as coordinates : vertex i of $S_j$ has $c_i^j$ as coordinates.

We will say that a triangle (abc) on an orientable surface is clockwise oriented if it is clockwise oriented with respect to the surface orientation.

Filters for Loop wavelets are defined as:

$T^j = (P^j \ Q^j)$

with $P^j = (p_{ik})$, $Q^j = (q_{ik})$

where $p_{ki} = 10$     if i=k

     6 if $d_{j+1}(i,k)=1$
     2 if $d_{j+1}(i,k)=2$ and level(k)=level(i)-1
     1 if $d_{j+1}(i,k)=2$ and level(k)=level(i)
     0 otherwise

and $q_{ki} = 10$     if i=k

     -6 if $d_{j+1}(i,k)=1$ and level(k)=j-1
     -6 if $d_{j+1}(i,k)=1$ and there exists m such that
         level(m)=j- 1
         $d_{j+1}(m,i)=1$
         (kmi) is anticlockwise oriented.
     6 if $d_{j+1}(i,k)=1$ and there exists m such that
         level(m)=j-1
         $d_{j+1}(m,i)=1$
         (kmi) is clockwise oriented.
     1 if $d_{j+1}(i,k)=2$ and there does not exist two different m and n such that
         $d_{j+1}(n,i)=1$ and $d_{j+1}(m,i)=1$
         and $d_{j+1}(m,k)=1$
         and $d_{j+1}(n,k)=1$.
     -2 if $d_{j+1}(i,k)=2$ and there exist m and n such that
         $d_{j+1}(m,i)=1$ and
         $d_{j+1}(n,i)=1$ and $q_{ni}=-6$ and $q_{mi}=-6$
     -2 for any other j such that $d_{j+1}(i,k)=2$
     0 otherwise.

For lifted midpoint subdivision with one vanishing moment:
For any vertex v of $M_{j+i}$, let a and b denote the vertices of the edge v of which v is the midpoint. Then
$p_{ki} = 1$ if i=k

     1/2 if $d_{j+1}(i,k)=1$
     0 otherwise

$q_{ki}= A_a/2+A_b/2+1$ if i=k

$A_a$ if k=a
$A_b$ if k=b
$A_a/2$ if $d_{j+1}(k,a)=1$ and k!=i
$A_b/2$ if $d_{j+1}(k,b)=1$ and k!=i
0 otherwise
with $A_x=-(3/4)*(sin(pi/3))/(n_x*sin(2*pi/n_x))$, $n_x$ being the valence of x.
Basis change:
For j>0, $f(d_i^j)$ is defined as follows :
Let A=[b,c] be the edge of $M_j$ of which vertex i in $M_{j+1}$ is the midpoint. Let

N, U, V be the vectors defined as follows:
If there exist two different facets in $S_j$ containing A, then N is the normalized average of the normals to those two facets. Otherwise, it is the normal to the only facet of $S_j$ having A as an edge.

$$U := \vec{bc}/\|\vec{bc}\|$$

$$V:=NxU$$

Then $f(d_i^j):(NUV)D_i^j$

## Claims

1. Method for rendering a graphic scene on a terminal, said graphic scene implementing a hierarchical tree comprising at least one node associated to an object of said scene,
   wherein at least one of said objects is defined by a wavelet-coded mesh, as a base mesh and wavelet coefficients corresponding to local modifications of said base mesh.

2. Method according to claim 1, wherein said graphic scene is of the MPEG4 type.

3. Method according to any of claims 1 and 2, wherein, for each of said objects defined by a wavelet-coded mesh, said corresponding node is associated, within a node interface of said hierarchical tree, to :

   - a field relating to said base mesh, called BaseMesh ;
   - a field relating to at least one rendering stream of said object, comprising said wavelets coefficients, called MeshStream,

      and wherein said BaseMesh and MeshStream fields can be transmitted and/or processed independently.

4. Method according to any of claims 1 to 3, wherein said terminal has a back channel, allowing to transmit at least one piece of information relating to said terminal and/or to an user of said terminal to a graphic scene server.

5. Method according to claim 4, wherein, for each of said objects defined by a wavelet-coded mesh, said corresponding node interface comprises a field allowing to indicate said back channel.

6. Method according to any of claims 4 and 5, wherein said piece of information belongs to the group comprising

   - a piece of information relating to the position of said user in said graphic scene, called position information ;
   - a piece of information relating to a direction of observation of said user, called direction information ;
   - a piece of information relating to the state of a cache of said terminal.

7. Method according to any of claims 4 to 6, wherein said node interface also implements at least one of the fields belonging to the group comprising

- a field relating to the texture of said object;
- a field indicating a frequency at which said terminal transmits at least one state information to a server ;
- a field relating to a field of view of said user, called FOV ;
- a field indicating a quality of rendering of said object, called Quality.

8. Method according to any of claims 3 to 7, wherein said node interface also comprises a field, called FocusPoint, allowing to indicate at least one area of said object for which an user wishes to get a quality of rendering greater than a predetermined threshold.

9. Method according to any of claims 7 and 8, wherein said Quality field pilots a relevance threshold for said wavelets coefficients, the wavelets coefficients lower than said relevance threshold not being applied to said mesh.

10. Method according to any of claims 3 to 9, wherein at least one of said objects may be animated by modifying in time, within said BaseMesh field, coordinates of at least one vertex of said base mesh, the wavelets coefficients of said MeshStream field remaining unchanged.

11. Method according to any of claims 3 to 10, wherein a step of editing said mesh allows to modify an existing object by acting on at least one of the elements belonging to the group comprising

- said base mesh;
- said wavelets coefficients ;
- a current mesh associated to said existing object within said rendered scene.

12. Method according to any of claims 3 to 11, wherein said rendering stream of said MeshStream field is organised into packets of at least one wavelets coefficient.

13. Method according to claim 12, wherein said packets of said rendering stream are of at least two types of packets, among the types belonging to the group comprising:

- base packets, comprising data which are essential to the rendering of said mesh defining said object;
- refinement packets ;
- bitplanes refinement packets,

said refinement packets and said bitplanes refinement packets comprising data for refining said mesh.

14. Method according to claim 13, wherein said refinement packets comprise at least one wavelets coefficient allowing to refine the rendering of at least one area of said object.

15. Method according to any of claims 13 and 14, wherein said bitplanes refinement packets allow to refine the preciseness of at least one wavelets coefficient.

16. Method according to any of claims 12 to 15, wherein said packets are transmitted from a server to at least one terminal within a single rendering stream.

17. Method according to any of claims 12 to 15, wherein said packets are transmitted from a server to at least one terminal within at least two parallel data streams, corresponding respectively to a base stream, comprising at least one base packet, and to at least one refinement stream, comprising at least one refinement packet and/or at least one bitplanes refinement packet.

18. Method according to any of claims 6 to 17, wherein said information relating to the state of a cache of said terminal indicates at least:

- a number of wavelets coefficients associated to each packet stored within said cache;
- a number of bitplanes associated to each packet stored within said cache.

19. Method according to any of claims 12 to 18, wherein said wavelets coefficients are organised into at least two separate subsets, extracted from a global data stream allowing to rebuild said object, each of said subsets corresponding to areas of said object, and undergoing independent coding, localisation data, which allow to locate said separate subsets within said global data stream, being inserted within said global data stream, so as to allow to distribute said wavelets coefficients among said packets, in view of a selective transmission of at least one of said subsets towards said terminal.

20. Method according to claim 19, wherein said subsets undergo a coding of "zero-tree" type.

21. Method according to any of claims 13 to 20, wherein each type of packet is structured into subpacket(s) belonging to the group comprising

   - for a base packet:

     - a subpacket relating to scale coefficients, allowing to modify the position of at least one vertex of said base mesh;
     - at least one subpacket relating to wavelets coefficients associated to a zero-tree, containing consecutive bitplanes and at least the first one ;

   - for a refinement packet:

     - at least one subpacket relating to wavelets coefficients associated to a zero-tree, containing consecutive bitplanes and at least the first one ;

   - for a bitplanes refinement packet:

     - at least one subpacket relating to wavelets coefficients associated to a zero-tree, containing consecutive bitplanes.

22. Method according to any of claims 20 and 21, wherein said global data stream comprises a header, comprising at least some of said localisation data, and a wavelets coefficients area, comprising a subarea identified by said localisation data for each of said subsets.

23. Method according to claim 22, wherein said header also comprises at least some of the information belonging to the group comprising :

   - the number of faces of said base mesh ;
   - the type of wavelets ;
   - information relating to said object;
   - information relating to the coding of said localisation data.

24. Method according to any of claims 1 to 23, wherein a wavelets coded texture is also associated to at least one of said objects defined by a wavelets coded mesh.

25. Terminal **characterised in that** it renders at least one graphic scene according to the method of any of claims 1 to 24.

26. Server of graphic scenes **characterised in that** it transmits to at least one client terminal a graphic scene designed to be rendered according to the method of any of claims 1 to 24.

27. Data storage medium **characterised in that** it comprises at least one graphic scene designed to be rendered by at least one client terminal according to the method of any of claims 1 to 24.

28. Method for coding a graphic scene implementing a hierarchical tree comprising at least one node associated to an object,
wherein at least one of said objects is defined by a wavelets coded mesh, as a base mesh and wavelets coefficients corresponding to local modifications of said base mesh.

29. Method according to claim 28, wherein said graphic scene is designed to be rendered on at least one client terminal according to the method of any of claims 1 to 24.

30. Graphic scene implementing a hierarchical tree comprising at least one node associated to an object, wherein at least one of said objects is defined by a wavelets coded mesh, as a base mesh and wavelets coefficients corresponding to local modifications of said base mesh.

31. Node of a hierarchical tree representative of a graphic scene, **characterised in that** it is associated to an object defined by a wavelets coded mesh, as a base mesh and wavelets coefficients corresponding to local modifications of said base mesh.

32. Signal to be transmitted to at least one terminal for rendering a graphic scene on said terminal, said signal comprising data representative of said graphic scene implementing a hierarchical tree comprising at least one node associated to an object of said scene, wherein said signal comprises at least one object defined by a wavelets coded mesh, as a base mesh and wavelets coefficients corresponding to local modifications of said base mesh.

33. Signal according to claim 32, wherein said signal is of the MPEG4 type.

34. Signal according to any of claims 32 and 33, **characterised in that**, for each of said objects defined by a wavelet-coded mesh, it comprises

  - a field relating to said base mesh, called BaseMesh ;
  - a field relating to a rendering stream of said object, comprising said wavelets coefficients, called MeshStream.

35. Signal according to any of claims 32 to 34, **characterised in that** it comprises a field allowing to indicate a back channel of said terminal, said back channel allowing to transmit at least one piece of information relating to said terminal and/or to an user of said terminal to a graphic scene server.

36. Signal according to claim 35, wherein said piece of information belongs to the group comprising

  - a piece of information relating to the position of said user in said graphic scene, called position information ;
  - a piece of information relating to a direction of observation of said user, called direction information ;
  - a piece of information relating to the state of a cache of said terminal.

37. Signal according to any of claims 35 and 36, **characterised in that** it also comprises at least one of the fields belonging to the group comprising

  - a field relating to the texture of said object ;
  - a field indicating a frequency at which said terminal transmits at least one state information to a server ;
  - a field relating to a field of view of said user, called FOV ;
  - a field indicating a quality of rendering of said object, called Quality.

38. Signal according to any of claims 34 to 37, **characterised in that** it also comprises a field, called FocusPoint, allowing to indicate at least one area of said object for which an user wishes to get a quality of rendering greater than a predetermined threshold.

39. Signal according to any of claims 37 and 38, wherein said Quality field pilots a relevance threshold for said wavelets coefficients, the wavelets coefficients lower than said relevance threshold not being applied to said mesh.

40. Signal according to any of claims 34 to 39, wherein said rendering stream of said MeshStream field is organised into packets of at least one wavelets coefficient.

41. Signal according to claim 40, wherein said packets of said rendering stream are of at least two types of packets, among the types belonging to the group comprising

  - base packets, comprising data which are essential to the rendering of said mesh defining said object;
  - refinement packets ;
  - bitplanes refinement packets,
    said refinement packets and said bitplanes refinement packets comprising data for refining said mesh.

**42.** Signal according to claim 41, wherein said refinement packets comprise at least one wavelets coefficient allowing to refine the rendering of at least one area of said object.

**43.** Signal according to any of claims 41 and 42, wherein said bitplanes refinement packets allow to refine the preciseness of at least one wavelets coefficient.

**44.** Signal according to any of claims 40 to 43, wherein said packets are transmitted from a server to at least one terminal within a single rendering stream.

**45.** Signal according to any of claims 40 to 43, wherein said packets are transmitted from a server to at least one terminal within at least two parallel data streams, corresponding respectively to a base stream, comprising at least one base packet, and to at least one refinement stream, comprising at least one refinement packet and/or at least one bitplanes refinement packet.

**46.** Signal according to any of claims 36 to 45, wherein said information relating to the state of a cache of said terminal indicates at least:

- a number of wavelets coefficients associated to each packet stored within said cache;
- a number of bitplanes associated to each packet stored within said cache.

**47.** Signal according to any of claims 40 to 46, wherein said wavelets coefficients are organised into at least two separate subsets, extracted from a global data stream allowing to rebuild said object, each of said subsets corresponding to areas of said object, and undergoing independent coding, localisation data, which allow to locate said separate subsets within said global data stream, being inserted within said global data stream, so as to allow to distribute said wavelets coefficients among said packets, in view of a selective transmission of at least one of said subsets towards said terminal.

**48.** Signal according to claim 47, wherein said subsets undergo a coding of "zero-tree" type.

**49.** Signal according to any of claims 41 to 48, wherein each type of packet is structured into subpacket(s) belonging to the group comprising

- for a base packet:

    - a subpacket relating to scale coefficients, allowing to modify the position of at least one vertex of said base mesh ;
    - at least one subpacket relating to wavelets coefficients associated to a zero-tree, containing consecutive bitplanes and at least the first one ;

- for a refinement packet:

    - at least one subpacket relating to wavelets coefficients associated to a zero-tree, containing consecutive bitplanes and at least the first one ;

- for a bitplanes refinement packet:

    - at least one subpacket relating to wavelets coefficients associated to a zero-tree, containing consecutive bitplanes.

**50.** Signal according to any of claims 47 to 49, wherein said global data stream comprises a header, comprising at least some of said localisation data, and a wavelets coefficients area, comprising a subarea identified by said localisation data for each of said subsets.

**51.** Signal according to claim 50, wherein said header also comprises at least some of the information belonging to the group comprising

- the number of faces of said base mesh ;
- the type of wavelets ;

- information relating to said object;
- information relating to the coding of said localisation data.

52. Signal according to any of claims 32 to 51, wherein it comprises a wavelets coded texture associated to at least one of said objects defined by a wavelets coded mesh.

53. Device **characterised in that** it comprises means for emitting a signal according to any of claims 32 to 52.

54. Device **characterised in that** it comprises means for receiving a signal according to any of claims 32 to 52.

**FIGURE 1**

**FIGURE 3**

EP 1 316 922 A1

| Headers | ZT Offsets | Scale c. | #bitplane1 | ... | #bitplane N0 | $ZT_0$ | #bitplane1 | ... | #bitplane NM | $ZT_M$ |
|---------|-----------|----------|-----------|-----|-------------|--------|-----------|-----|-------------|--------|

**FIGURE 2A**

| Scale coeffs | ZT Id | $ZT_0$ | ... | ZT Id | $ZT_{N-1}$ |
|-------------|-------|--------|-----|-------|-----------|

**FIGURE 2B**

| ZT Id | $ZT_0$ | ... | ZT Id | $ZT_{N-1}$ |
|-------|--------|-----|-------|-----------|

**FIGURE 2C**

| Nb Zt | $ZT\_Id_0$ | Bitplane | $Plane_0$ | ... | $Plane_{N0-1}$ | ... | $ZT\_Id_{NM-1}$ | Bitplane | $Plane_0$ | ... | $Plane_{NM-1}$ |
|-------|-----------|----------|-----------|-----|----------------|-----|-----------------|----------|-----------|-----|----------------|

**FIGURE 2D**

**FIGURE 4**

**European Patent Office**

## EUROPEAN SEARCH REPORT

Application Number

EP 01 46 0075

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | MIN SHENG ZHONG ET AL: "JPEG2000-based scalable reconstruction of image local regions" PROCEEDINGS OF 2001 INTERNATIONAL SYMPOSIUM ON INTELLIGENT MULTIMEDIA, VIDEO AND SPEECH PROCESSING. ISIMP 2001 (IEEE CAT. NO.01EX489), HON, pages 174-177, XP002211321 2001, Piscataway, NJ, USA, IEEE, USA ISBN: 962-85766-2-3 | 1-3,12, 16,19, 20,22, 23, 25-34, 40,44, 47,48, 50,51, 53,54 | G06T17/00 |
| Y | | 4,7,24, 35,37,52 | |
| A | * abstract * | 5,6, 8-11, 13-15, 17,18, 21,36, 38,39, 41-43, 45,46,49 | |
| | * sections II, III.A 1)-3), III.B --- | | **TECHNICAL FIELDS SEARCHED (Int.Cl.7)** |
| D,X | KHODAKOVSKY A ET AL: "PROGRESSIVE GEOMETRY COMPRESSION" COMPUTER GRAPHICS. SIGGRAPH 2000 CONFERENCE PROCEEDINGS. NEW ORLEANS, LA, JULY 23 - 28, 2000, COMPUTER GRAPHICS PROCEEDINGS. SIGGRAPH, NEW YORK, NY: ACM, US, 23 July 2000 (2000-07-23), pages 271-278, XP001003565 ISBN: 1-58113-208-5 | 1,25-32, 53,54 | G06T |
| Y | * sections 1.1, 3.2 --- -/-- | 2,33 | |

The present search report has been drawn up for all claims

| Place of search | Date of completion of the search | Examiner |
|---|---|---|
| BERLIN | 28 August 2002 | Kröner, S |

EPO FORM 1503 03.82 (P04C01)

**European Patent Office**

## EUROPEAN SEARCH REPORT

Application Number

EP 01 46 0075

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | LOUNSBERY M ET AL: "MULTIRESOLUTION ANALYSIS FOR SURFACES OF ARBITRARY TOPOLOGICAL TYPE" ACM TRANSACTIONS ON GRAPHICS, ASSOCIATION FOR COMPUTING MACHINERY, NEW YORK, US, vol. 16, no. 1, 1997, pages 34-73, XP000686202 ISSN: 0730-0301 * abstract; figure 1 * * sections 1, 2 * | 1,25-32, 53,54 | |
| Y | JORDAN F ET AL: "Streaming of photo-realistic texture mapped on 3D surface" PROCEEDINGS OF THE 1997 INTERNATIONAL CONFERENCE ON IMAGE PROCESSING, SANTA BARBARA, CA, USA 26-29 OCT. 1997, LOS ALAMITOS, CA, USA,IEEE COMPUT. SOC, US, 26 October 1997 (1997-10-26), pages 390-393, XP010253985 ISBN: 0-8186-8183-7 * abstract * * sections 1, 3.3, 3.4, 4.4, 5.1 * | 4,7,24, 35,37,52 | |
| Y | BEREKOVIC M ET AL: "A flexible processor architecture for MPEG-4 image compositing" PROCEEDINGS OF THE 1998 IEEE INTERNATIONAL CONFERENCE ON ACOUSTICS, SPEECH AND SIGNAL PROCESSING, 1998. SEATTLE, WA, USA 12-15 MAY 1998, NEW YORK, NY, USA,IEEE, US, 12 May 1998 (1998-05-12), pages 3153-3156, XP010279508 ISBN: 0-7803-4428-6 | 2,33 | TECHNICAL FIELDS SEARCHED (Int.Cl.7) |
| A | * sections 1, 2 * * abstract * | 4,24,35, 52 | |

-/--

The present search report has been drawn up for all claims

| Place of search | Date of completion of the search | Examiner |
|---|---|---|
| BERLIN | 28 August 2002 | Kröner, S |

EPO FORM 1503 03.82 (P04C01)

EP 1 316 922 A1

## European Patent Office

## EUROPEAN SEARCH REPORT

Application Number

EP 01 46 0075

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PURI A ET AL: "Implicit arbitrary shape visual objects via MPEG-4 scene description" PROCEEDINGS OF THE 1999 INTERNATIONAL CONFERENCE ON IMAGE PROCESSING, 1999. ICIP 99. KOBE, JAPAN 24-28 OCT. 1999, PISCATAWAY, NJ, USA,IEEE, US, 24 October 1999 (1999-10-24), pages 258-262, XP010369199 ISBN: 0-7803-5467-2 * sections 1, 3.3 * ----- | 2,33 | |
| | | | TECHNICAL FIELDS SEARCHED (Int.Cl.7) |

The present search report has been drawn up for all claims

| Place of search | Date of completion of the search | Examiner |
|---|---|---|
| BERLIN | 28 August 2002 | Kröner, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

34